# EUROPEAN PATENT APPLICATION

(11) **EP 0 930 752 A2**
(43) Date of publication of application: **21.07.1999**
(21) Application number: 99100226.2
(22) Date of filing: 08.01.1999
(51) Int. Cl.: H04L 27/26

(54) **Method for allocating data and power in a discrete multitone communication system**

(30) Priority: 14.01.1998 US 721898; 14.01.1998 US 739098
(71) Applicant: MOTOROLA, INC., Schaumburg, IL 60196 (US)
(72) Inventor: Levin, Howard E., Austin, Texas 78794 (US); May, Michael R., Austin, Texas 78753 (US); Pendleton, Matthew A., Cedar Park, Texas 78613 (US); Johnson, Terence, Austin, Texas 78758 (US)
(74) Representative: Gibson, Sarah Jane

(57) **Abstract**

In the present invention, a carriers associated with a discrete multitoned (DMT) communications system (10) are configured. In one embodiment the carriers are sorted according to bit allocation capacity. The number of bits needed to attain a specified bit rate are then allocated beginning with the carrier having the greatest bit allocation capacity and proceeding toward the carrier having the least bit allocation capacity until all bits to are allocated. Once allocated, the power to any unused bins is reduced. In another embodiment, unused bins would include a bad bin, where a bad bin is identified as a carrier that is not capable of successfully transmitting data to the destination. A marginal bin is identified as a carrier that may be capable of transmitting data to the destination. The power to a bad bid is reduced and allocated to the marginal or good bin(s) to allow an increased bit rate. In another embodiment, the power to marginal bin is reduced and allocated to the good bin(s).

## Description

### Field of the Invention

This invention relates generally to a communication system and more specifically to a method for configuring a discrete multi-tone system.

### Background of the Invention

In order to make high data rate interactive services such as video conferencing and internet access available to more residential and small business customers, high speed data communication paths are required. Although fiber optic cable is the preferred transmission media for such high data rate services, it is not readily available in existing communications networks, and the expense of installing fiber optic cable is prohibitive. Current telephone wiring connections, which consist of twisted pair media, were not designed to support the high data rates required for interactive services such as video on demand or even high speed interconnects. In response, Asymmetrical Digital Subscriber Line (ADSL) technology has been developed to increase the transmission capabilities within the fixed bandwidth of existing twisted pair connections, allowing interactive services to be provided without requiring the installation of new fiber optic cable.

Discrete Multi-Toned (DMT) is a multi-carrier technique that divides the available bandwidth of a communications channel such as a twisted pair connection into a number of frequency sub-channels. These sub-channels are also referred to as frequency bins or carriers. The DMT technique has been adopted by the ANSI T1E1.4 (ADSL) committee for use in ADSL systems. In ADSL, DMT is used to generate 250 separate 4.3125 kHz sub-channels from 26 kHz to 1.1 MHz for downstream transmission to the end user, and 25 sub-channels from 26 kHz to 138 kHz for upstream transmission by the end user. Each bin is allocated a number of bits to send with each transmission. The number of bits allocated per bin to an ADSL system are 0, and 2-15 bits.

Prior to transmitting real-time data with an ADSL system, an initialization process occurs. During a first portion of the initialization process, an activation and acknowledgment step occurs. It is during this step that a transmit activation tone is generated following power-up of the ADSL system. Transceiver training is the next step of the initialization process. During transceiver training, the equalization filters of the ADSL system are trained and system synchronization is achieved. Next, channel analysis and exchange are performed as part of the initialization processes. During the channel analysis and exchange, the Signal to Noise Ratio (SNR) of the channels is determined, and bit loading configuration of the bins and other configuration information is transferred.

Subsequent to the initialization process, real-time data transmission begins. During real-time data transmission, proposed implementations of the ANSI standard require that each carrier be transmitted with a nominal amount of power. The nominal amount of power is proposed to be a full amount of power that is approximately the same across all bins, as only a fine power gain adjustment variation occurs between carriers. However, there are disadvantages to assigning the nominal amount of transmit power to each carrier. For example, one problem is that there is unnecessary power consumption associated with assigning a nominal amount of power to a carrier that is not transmitting any data. This occurs when the requested data rate is less than the maximum data rate achievable an the line. This additional power results in additional system costs in terms of power consumption. Another issue of transmitting power on unused bins is that as a carriers signal is attenuated over long line distances, there is a point where data cannot be transmitted with a desired certainty. When this occurs, the bit allocation capacity of the bad bin is set to zero, however, under proposed implementations of the specification, its transmit power remains allocated to the now unused bin. Therefore, there is a high cost in power even when there is not a high data rate. Another issue with the ADSL specification is that crosstalk interference occurs when signals are being transmitted at similar frequencies on adjacent line.

Generally, over one-half of the power consumed by a typical DMT system is consumed by the line drivers. In addition to the thermal issues associated with increased power, there is an additional problem that crosstalk from adjacent phone lines can increase line noise levels as much as 40 dB. Therefore, it would be beneficial to optimize power consumption of a DMT system, and reduce cross-talk between adjacent twisted pair wires.

### Brief Description of the Drawings

The invention will be described with reference to the following figures:
FIG. 1, illustrates an ADSL system in block form;
FIG. 2, illustrates an SNR reference table;
FIGs. 3-8, illustrate in flow diagram form, specific methods for
FIG. 9, illustrates a graph of increased bit rate versus the number of used carriers.

### Detailed Description of the Drawings

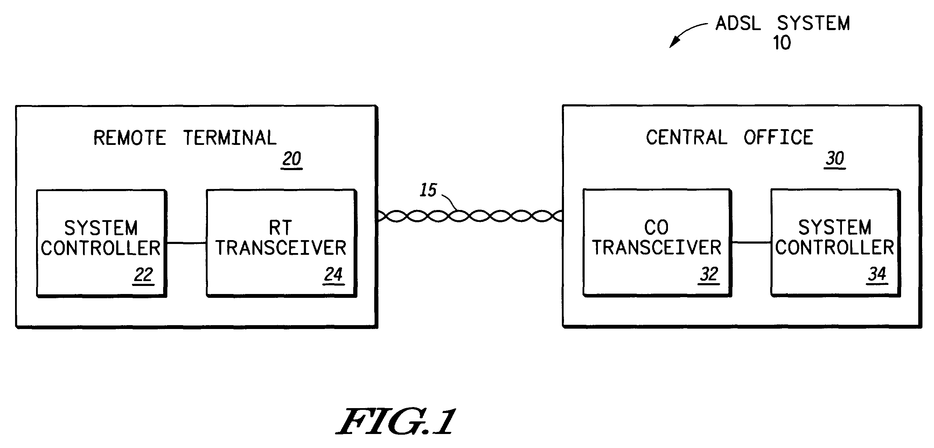

FIG. 1 illustrates an ADSL system 10. The ADSL system 10 comprises a remote terminal 20, and a central office 30 connected by a twisted pair transmission media. The remote terminal 20 and central office 30 each comprise a system controller 22 and 34, respectively. In addition, the remote terminal 20 and central office 30 respectively comprise a transceiver 24 and 32. The ADSL system 10 is capable of implementing the present invention. In operation, the central office 30 transmits downstream data across the transmission media 15 to the remote terminal 20. The data is received at the remote terminal 20 by the transceiver 24, which provides the received data to the system controller 22 for further processing. In a likewise fashion, the upstream data would be transmitted from the remote terminal 20, across the transmission media 15, and received by the central office transceiver 32, which provides the data to the system controller 34.

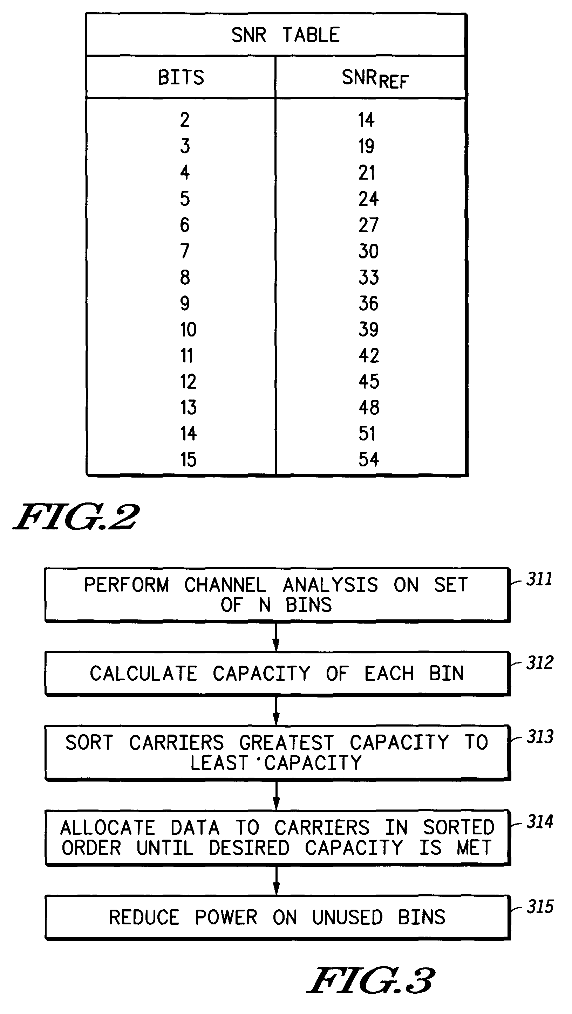

FIG. 2 illustrates an SNR reference table for use within the ADSL system 10. The SNR reference table indicates an SNRref value, which is the SNR needed for a bin to transmit a specific number of bits at a specific Bit Error Rate (BER). For example, according to the table of FIG. 2, a bin which is determined to have an SNR of 30 would be able to transmit seven bits of data. Also, the values of SNR reference table will vary depending upon the type of error correction used, if any. For example, the use of error correction could reduce each SNRref value in FIG. 2 by three. This reduction would allow a bin having a SNR of 30 to transmit eight bits. Generally, the SNR reference table will be empirically derived, but can also be derived based upon simulated or theoretical results.

FIG. 3 illustrates a method for implementing the present invention. While the specific embodiment will address a specific DMT implementation, it is to be understood that the present invention applies to any DMT implementation. At step 311, an analysis of an ADSL channel is performed. In one embodiment of the present invention, the channel analysis step 311 would return a signal-to-noise ratio (SNR) for a channel in an initial state. Generally, the channel analysis step 311 of FIG. 3 are performed as part of the initialization process. However, other implementations where the steps of FIG. 3 are performed during real time operation are anticipated by the present invention.

At step 312, the data capacity of each bin is calculated. In one embodiment, the data capacity is calculated based upon the SNR of a carrier, as determined in step 311, and the SNR reference table of FIG. 2. The data capacity can be determined by identifying, for a given SNR reference table, the maximum number of bits that can be transmitted. For example, according to the table of FIG. 2, the maximum number of bits that could be allocated to a bin having an SNR of 32 is seven bits.

Next, at step 313, the carriers or bins are sorted from greatest capacity to least capacity. Next, at step 314, the data rate to be transmitted is allocated beginning with the carrier(s) with the greatest capacity and proceeding to the carrier(s) with the least capacity. The data capacity is allocated until the specified data rate is achieved. By allocated to those bins with the greatest data rate first, it is possible to minimize the number of carriers used (used carriers) to transmit data at the desired data rate. At step 315, the power on the unused carriers is reduced in order to minimize the power used to transmit a specified amount of information. Generally, the power will be reduced by at least an order of magnitude of a the power of a used bin. This is advantageous over the prior art which has required each channel to maintain a nominal amount of power whether it is used or unused. By reducing power to unused bins, an optimal amount of power dissipation is possible

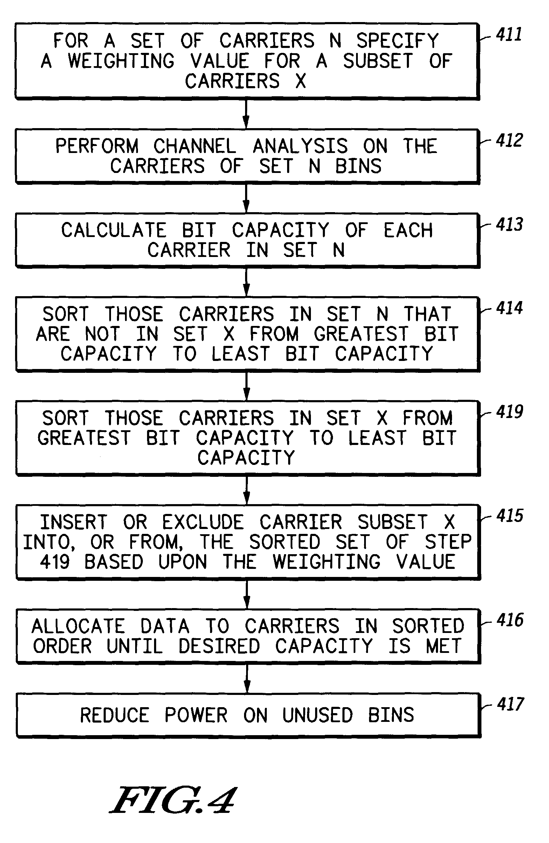

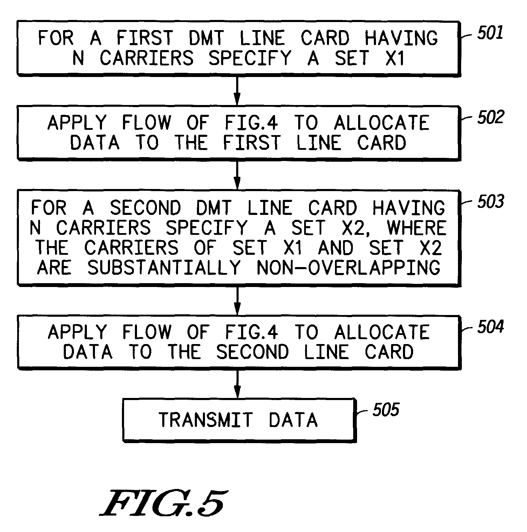

FIG. 4 illustrates a different embodiment of the present invention. At step 411, for a set of carriers N, a subset carrier X is specified. The subset X will generally represent carriers which are to be preferred or avoided during the bit loading allocation process. The subset X is then weighted. The weighting can be explicit, whereby a weighting value is specified by a user, or implicit, whereby the system would have a default weighting for the subset X. For example, the subset X could implicitly be heavily weighted. The function of the weighting will be discussed with reference to step 415.

At step 412, a channel analysis is performed on each carrier of set N. The channel analysis of step 412 is performed in the same manner as the channel analysis of step 311 of FIG. 3, as previously discussed. Next, at step 413, the bit loading capacity for each bin in carrier set N is calculated. This step is analogous to step 312 of FIG. 3.

At step 414, the carriers of set N that are not in set X are sorted from greatest bit loading capacity to least bit loading capacity to form a sorted set of carriers. This step is analogous in function to step 313 of FIG. 3, except that it is performed on a subset of the set.

At step 419, the carriers in set X are also sorted from greatest bit loading capacity to least bit loading capacity to for another sorted set. In an alternative embodiment, the set X need not be sorted.

At step 415, the bins associated with carrier subset X are inserted or excluded from the sorted set of carriers. In one embodiment, where the bins of set X are implicitly heavily weighted, the set would be positioned in the sorted set before, or after, bins meeting some predefined criteria. For example, heavily weighted bins could be positioned before the bins with the greatest capacity. In another embodiment, the heavily weighted bins could be positioned between bins having a capacity of ten bits, and bins having a capacity of nine bits. Generally, a heavily weighted set is inserted with bins having significant bit allocation capacity. In one embodiment, where 15 bits is the maximum loading for a bin, a heavily weighted set would generally be inserted at or above the 7 bit allocation level.

In a similar manner, where the bins of set X are implicitly lightly weighted, they could be excluded from the sorted list entirely, inserted after the bins with the least bit loading capacity, or inserted between bins having a specified loading level. Generally, a lightly weighted set is inserted with bins having low bit allocation capacity. In one embodiment, where 15 bits is the maximum loading for a bin, a lightly weighted set would generally be inserted below the 7 bit allocation level.

In an embodiment where a numerical weighting is applied the exact placement of the bins of set X would be placed, or excluded, based upon the value of the weighting.

At step 416, the number of bits needed to support a specified data rate are allocated to the bins based upon the sorted order of the set. For example, assuming the set X is inserted between bins having loading capacity of 13 and 14 bits. The allocation would begin with a bin, not in set X, having 15 bits of loading capacity. Once the first bin was assigned 15 bits, another bin, not in set X, having 15 bits of capacity would be assigned 15 bits, and soon until all 15 bit bins are fully assigned. Next, all 14 bit bins, not in set X would be filled in a similar manner. Next, the bits of set X would be filled prior to the loading of any 13 bit capacity bin which is not in set X. Subsequent to each bin of set X being filled, the filling process would continue with the 13 bit capacity bins.

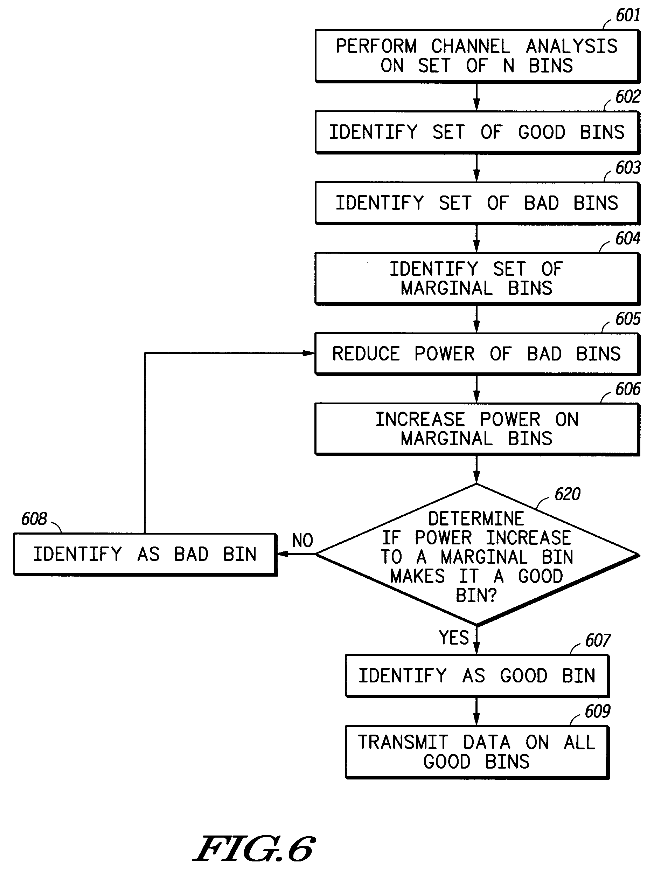

FIG. 5 illustrates another embodiment of the present invention whereby crosstalk between adjacent lines can be reduced. At step 591, a subset of carriers X1 is specified for a first line card. At step 502, the flow of FIG. 4 is applied to the subset X1. This in effect minimized the number of carriers line card 2 needs to drive in order to support a specific data rate.

At step 503, a subset of substantially non-overlapping carriers X2 is specified for a first line card. In one embodiment, the sets X1 and X2 would be mutually exclusive in that they would attempt to allocate the data capacity to bins operating at different frequencies. In yet another embodiment, the sets X1 and X2 would be chosen to buffer used bins in separate line cards from each other. For example, if set X1 specified bins 1-10 as bins to be filled first, set X2 would indicate bins 12-21 as bins to be filled first. To the extent the bit loading capacity could be allocated within the specified bins, there would be an unused bin, bin 11, buffering the frequency range of set X1 and X2. This buffering allows for greater immunity to cross talk.

Once set X2 is defined, the method of figure 4 is applied in order to optimize power of the system. At step 505, data transmission occurs, allowing for optimization of power dissipation and limiting crosstalk among adjacent lines.

FIGs. 6-9 illustrate another method for implementing the present invention.. At step 601 of FIG. 6, an analysis of an ADSL channel is performed. In one embodiment, the channel analysis would return the SNR for a channel in an initial state. Generally, the channel analysis and steps of FIG. 6 are performed as part of the initialization process. However, other implementations where the steps of FIG. 6 are performed in real time are anticipated by the present invention.

Based upon the SNR value from the channel analysis step, it is determined at step 602 which bins associated with the channel are good bins. A good bin is defined to be a bin that meets a predefined SNR which is capable of transmitting a minimum amount of data. For example, the SNR reference (SNRref) values of table 2 indicates that in order to have two bits of data allocated to a bin, and maintain a specific BER, that the bin needs to have an SNR of at least 14. A channel having an SNR of less than 14 would indicate that the channel is not capable of sustaining the BER of the table while transmitting the minimum number of bits. Generally, a bin will be defined as a good bin if a minimum amount of data can be transmitted while meeting a predefined BER.

Next, at step 603, any bad bins within the channel are identified. A bad bin fails to meet a predefined performance criteria. In one embodiment, a specific carrier is identified as a bad bin if it is determined that no data can be transmitted within the predefined BER. Generally, this will be accomplished by comparing the SNR of a specific channel to the SNRref of the minimum amount of transmitted value and determining if a specified criteria is met. For example, the criteria may be that any carrier having a SNR minus SNRref of -5 or less is a bad bin. Therefore, given the table of FIG. 2, any channel having a SNR of 9 or less would be classified as a bad bin. Generally, a bad bin is not capable of having any data allocated to it.

Next, at step 604, a set of marginal bins is identified. The set of marginal bins is defined to be those bins that are not previously determined to be good bins or bad bins. Per the previous example, a marginal bin would have a SNR value between 9 and 14. This is because a carrier with an SNR of 14 or greater would be a good bin, and a carrier with an SNR of 9 or less would be a bad bin. Other definitions of marginal bins may be used as well, for example it may be desirable to define any bin not capable of carrying 5 bits as a marginal bin, or based on intervals between SNRref values.

Next, at step 605, the transmit power allocated to the bad bins is reduced. The power can be reduced by a fixed amount, or based upon a scale factor. An example of a bad bin having its transmit power reduced by a fixed amount would be changing the filter response to attenuate bad bins An example of reducing power to a bad bin by a scale factor would be to multiply the carrier in the frequency domain by 0.10. By reducing the transmit power associated with a bad bin, less power is used when there is no possibility of data being transmitted. This is an advantage over the proposed prior art methods which specify transmit power being maintained on all bins or transmits a small amount of data on marginal bins.

Next, at step 606, the power on the marginal bins is increased. Generally, the power on the marginal bins will be increased by an amount made available by reducing the bad bins' power, thereby resulting in no change in the overall system power. In one embodiment, the available power would be used to evenly gain all marginal bins. In another example, the available power could be allocated to any marginal bin based on the SNR for each bin. In yet another embodiment, the available power would added to the marginal bins capable of providing the greatest increase in bit capacity for the allocated power.

Next, at step 620, a determination is made for each marginal bin having an increased power level, whether the power increase results in the marginal bin becoming a good bin. This determination can be estimated, or determined by a channel analysis on the marginal bins, to determine if the SNR value following an increase in transmit power is sufficient to support data transfer. When a marginal bin is improved, and determined to be a good bin, flow proceeds to step 607, and the newly identified good bin is so identified. When a marginal bin's power is increased, and determined to still be marginal, flow proceeds to step 608. At step 608 the bin is identified as a bad bin, and the flow proceeds to step 305, where the newly identified bad bin has its power reduced. It should be noted, that it would be possible to maintain the marginal status of the bin at step 608, and attempt to increase the power even more to create a good bin. However, at least some of the marginal bins would need to be identified as bad bins in order to free-up extra power for allocation which would then be used to improve the SNR of a marginal bin, instead of identifying it as bad at step 608. Next, at step 609, data is transmitted on all bins defined as good bins.

The flow of FIG. 6 provides an improvement over the proposed prior art by not maintaing a constant power level to a bad bin. In addition, the prior art does not allow substantially increasing the power in good or marginal bins to improve data rate performance. The present invention allows maximizing the data rate in cases where the signal strength would otherwise be attenuated to the point where no useful data can be transmitted and received on at least some bins.

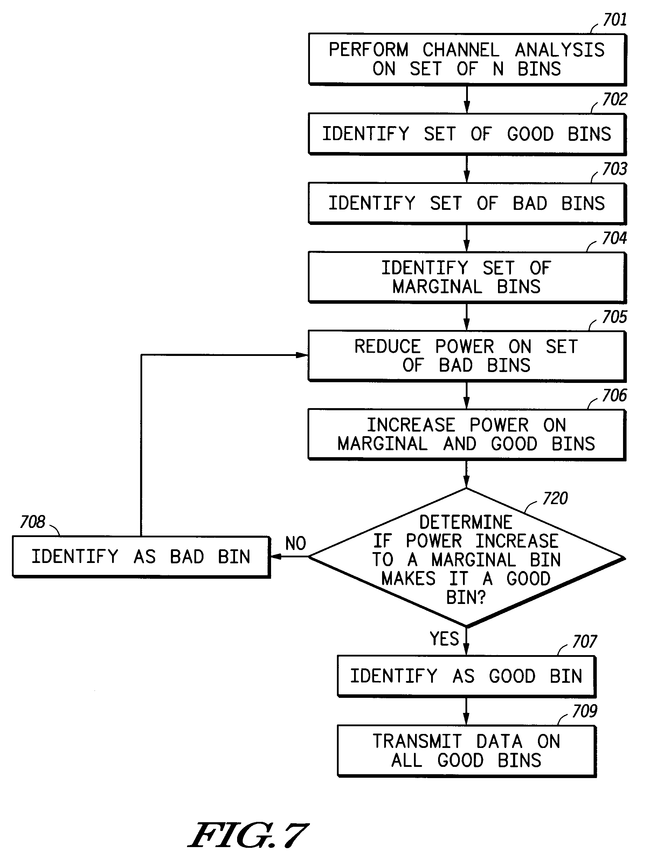

FIG. 7 illustrates another method in accordance with the present invention. Steps 701 through 704 are analogous to steps 601 through 604 of FIG. 6, and will not be discussed further. Next, at step 706, the power on the marginal and good bins will be increased. In this embodiment, not just the marginal bins' power is increased. This allows for an increased bit allocation to good bins and marginal bins alike. The steps 720, 707, 708 and 709 are analogous to steps 620, 607, 608 and 609 of FIG. 6, and will not be discussed further herein.

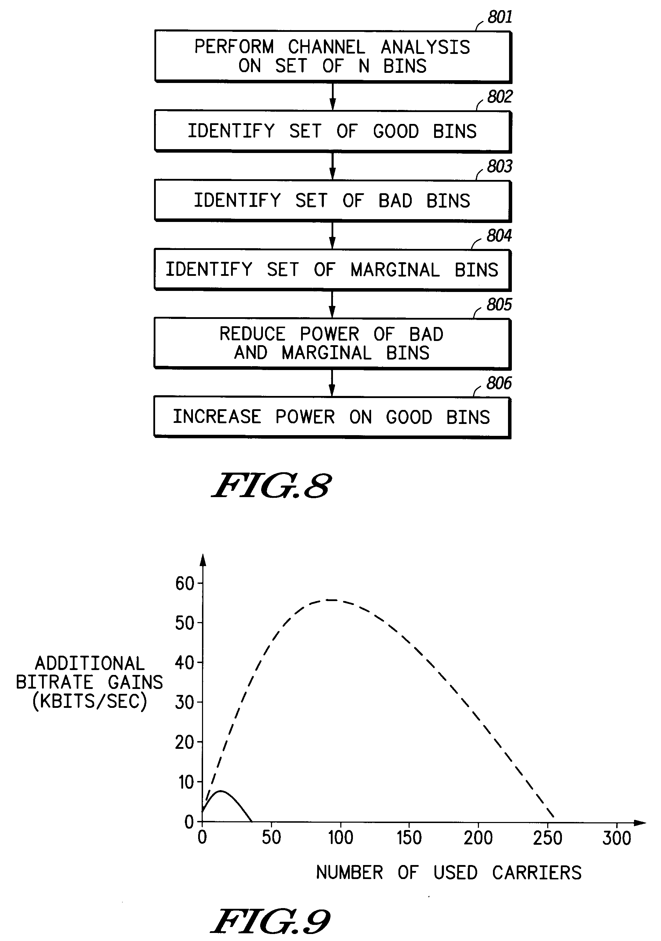

FIG. 8 illustrates another method in accordance with the present invention. Steps 801 through 804 are analogous to steps 601 through 604 of FIG. 6, and will not be discussed further. Next, at step 805, the power on the marginal and bad bins is reduced. Next, at step 806, the power on the just the good bins is increased. In this embodiment, all available power from the bad and marginal bins is reallocated to the good bins. This allows for an increased bit allocation to good bins. In general, the power would not be increased beyond a the amount needed to transmit the maximum data capacity of each bin at a specific BER.

The increase in bit rate using the present invention is illustrated in FIG. 9. FIG. 9 illustrates the bit rate gain observed by the inventors when the power associated with unused carriers is reallocated. Note, that when all 250 carriers are used there is no power to be reallocated and, therefore, to increase in overall data rate. However, when only 100 carriers were used in the system tested, and the power from the 150 unused carriers was reallocated to the used bins, an increased bit rate of approximately 550 kilo-bits per second was realized. Therefore, it should be recognized that by reallocating the power associated with an ADSL system provides a performance improvement over the prior art standard. The use of the present invention would allow for signals to be transmitted greater distances by reallocating power to the bins that are capable of carrying signals over the additional distance. This is an advantage over the prior art which does not allow for such power reallocation.

The foregoing specification has identified a preferred method for improving power consumption of an ADSL system. The invention has been described with reference to specific embodiments. However, one of ordinary skill in the art will appreciate that various modifications and changes can be made to the present invention without departing from the scope of the present invention as set forth in the claims below. For example, the specific embodiment has been discussed in terms of using the SNRref table of FIG. 2 to determine the loading of a bin. One skilled in the art would appreciate that other methods of determining bin loading are capable of being used. Another example of a modification anticipated by the of the present invention would be to identify and weight multiple subsets of bins. One skilled in the art would appreciate that the invention is equally applicable where other methods of classifying bins are used. Yet another example of a modification would be to periodically transmit power on some or all of the unused bins in order to monitor the SNR of the bin. In the claims, means-plus-function clause(s), if any, cover the structures described herein that perform the recited function(s). The mean-plus-function clause(s) also cover structural equivalents and equivalent structures that perform the recited function(s).

## Claims

1. A method for configuring a Discrete Multi-Tone communication system, the method comprising the steps of:
performing channel analysis on a plurality of carriers;
allocating data capacity to a portion the plurality of carriers, wherein the portion of the plurality of carriers having bits allocated to them are used carriers and a portion of the plurality of carriers not having bits allocated to them includes an unused carrier; and
reducing power to the unused carrier.

2. The method of claim 1, wherein the unused carriers do not meet a predefined performance criteria.

3. The method of claim 2, wherein the predefined performance criteria specifies a predefined data rate at or below a specified error rate.

4. The method of claim 2, wherein the predefined performance criteria specifies a signal to noise ratio below a predefined value.

5. The method of claim 1, further comprising:
a step of sorting the plurality of carriers to create a sorted list, where the sorted list is sorted according to bit loading capacity;
the step of performing channel analysis includes determining a bit loading capacity; and
the step of allocating data capacity to the plurality of carriers further comprising allocating the data to used carriers according to the sorted list until all of the data capacity is allocated, wherein a bin having a greatest bit loading capacity is completely filled before a bin having less than the greatest bit loading capacity.

6. The method of claim 5, wherein the step of performing channel analysis further includes the substeps of:
determining a Signal-to-Noise Ratio (SNR) of the plurality of carriers;
providing a SNR reference table indicating a amount of SNR needed to transmit a specific number of data bits at a predefined Bit Error Rate (BER); and
determining the bit loading capacity based upon the SNR of the plurality of carriers and the SNR reference table.

7. The method of claim 5, wherein the step of reducing power includes reducing the power to the unused carrier by a ratio relative to a used carrier.

8. The method of claim 5, wherein the step of reducing power includes reducing the power to the unused carrier by specific amount.

9. The method of claim 1, 2, 3, 4, 5, 6, 7, or 8 further comprising the step of:
increasing the power to at least one of the used carriers.

10. The method of claim 9, wherein the step of increasing the power increases the power by a ratio relative to the power allocated to other carriers of the plurality of carriers.
